(19) Europäisches Patentamt
European Patent Office
Office européen des brevets

(11) EP 4 800 508 A1

(12) EUROPEAN PATENT APPLICATION
published in accordance with Art. 153(4) EPC

(43) Date of publication:
02.09.2026 Bulletin 2026/36

(21) Application number: 24921998.1

(22) Date of filing: 03.12.2024

(51) International Patent Classification (IPC):
*G05D 1/242* (2024.01) *G05D 1/43* (2024.01)
*G05D 1/69* (2024.01)

(52) Cooperative Patent Classification (CPC):
G05D 1/242; G05D 1/43; G05D 1/69; G05D 1/693;
G05D 1/695

(86) International application number:
PCT/JP2024/042631

(87) International publication number:
WO 2025/164080 (07.08.2025 Gazette 2025/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.01.2024 JP 2024012272

(71) Applicant: Teamlab Inc.
Tokyo 101-0052 (JP)

(72) Inventors:
- ONCHI SUGUIMITZU, Diego Eiji
Tokyo 101-0052 (JP)
- ZHOU, Xiaohang
Tokyo 101-0052 (JP)
- KOYAMA, Yoshimi
Tokyo 101-0052 (JP)

(74) Representative: Peters, Sebastian Martinus
Octrooibureau Vriesendorp & Gaade B.V.
Koninginnegracht 19
2514 AB Den Haag (NL)

# (54) TRAVELING SYSTEM AND TRAVELING DEVICE

(57) [Problem] To appropriately stop a plurality of traveling devices at a plurality of stopping areas on a predetermined route without relying on control from a higher-level control station.

[Solution] Each of a plurality of traveling devices (20) has: a distance measurement unit for measuring the distance to a designated point (P) on a predetermined path (10); a detection unit for detecting coming close to another traveling device (20) in front; and a control unit for controlling start and stop on the basis of a predetermined algorithm. The control unit temporarily stops the host traveling device (20) when it is detected that the host traveling device (20) has reached the designated point (P) or has come close to another traveling device (20) ahead, calculates the distance to the designated point (P) during the temporary stop, estimates a group to which the host traveling device (20) belongs on the basis of the distance to the designated point (P), obtains stop information for stopping in a stop area (AR) on the basis of the group information, and stops the host traveling device (20) in the stop area (AR) on the basis of the stop information.

(a) S1 : Free-travel step
10
P
30
AR
20
40

(b) S2 : Calculation step
G3
G2
G1
G0
G0···0, 1, 2
G1···3, 4, 5
G2···6, 7, 8
G3···9, 10, 11
G4···12, 13, 14
G0··· pass count 5
G1··· pass count 4
G2··· pass count 3
G3··· pass count 2
G4··· pass count 1
To S3

FIG. 5

EP 4 800 508 A1

## Description

TECHNICAL FIELD

The present invention relates to a system for causing a plurality of traveling devices capable of autonomous travel to travel along a predetermined route. The present invention also relates to a traveling device capable of autonomous travel itself.

BACKGROUND ART

The applicant has previously proposed a motordriven traveling device that travels on a pre-laid lane (PTL1). The traveling device described in PTL1 is designed to travel while in contact with side walls provided on both left and right sides of the lane.

Additionally, a traveling toy that autonomously travels along a track drawn on a travel surface has also been known in the art (e.g., PTL2). The traveling toy described in PTL2 includes a photo sensor (optical sensor) for detecting the track drawn on the travel surface and is configured to optically detect the track on the basis of reflected light from the travel surface with the photo sensor.

CITATION LIST

PATENT LITERATURE

[PTL1] Japanese Patent No. 7365084
[PTL2] JP 2006-181241 A

SUMMARY OF INVENTION

TECHNICAL PROBLEM

Now, consider continuously causing a plurality of the traveling devices as described in PTL1 and PTL2 to travel on a predetermined route. In such a case, for example, it is effective to provide charging areas at various locations on the route, periodically stop the traveling devices at the charging areas, charge the batteries mounted on the traveling devices with wireless chargers, and then resume traveling. By automatically repeating such stopping and starting for charging, each traveling device can continue to travel on the route.

When causing traveling devices to travel autonomously in this manner, it is generally considered appropriate to provide a higher-level control station such as a control center, to transmit control instructions relating to stopping and starting to all traveling devices from the control station, and to control the traveling states of the traveling devices on the basis of these instructions. However, when the traveling states of all traveling devices are controlled by the higher-level control station, it is necessary to frequently transmit and receive information between the traveling devices and the control station, for example, with each traveling device reporting its own position, remaining battery level, and the like to the higher-level control station, and with the control station transmitting instructions designating charging areas to each traveling device. As a result, the overall amount of communication data in the system inevitably increases, causing the problem that the control processing of the traveling devices cannot keep up unless the communication speed is very fast. In particular, when the number of traveling devices is large, the communication burden becomes enormous, making it more difficult to realize such a system. For example, in an indoor environment with poor communication conditions where traveling devices are caused to travel in a dense cluster, it is not practical to centrally manage all traveling devices by means of a higher-level control station.

On the other hand, due to the aforementioned problem of the amount of communication data, it is also conceivable to abandon controlling the traveling devices by means of a higher-level control station and instead allow each traveling device to travel independently. However, in such a case, since each traveling device can no longer grasp the situation of other traveling devices, the problem arises that it is difficult to independently determine at which charging area to stop. In particular, when charging areas are provided on a predetermined route, if each traveling device stops at a charging area on its own, this becomes an obstacle for the subsequent traveling devices, potentially causing collisions with subsequent traveling devices or preventing subsequent traveling devices from advancing past the stopped traveling device. There is also a concern that if a large number of traveling devices attempt to stop at one charging area at the same time, the number may exceed the allowable capacity of the charging area. Note that a similar problem may occur not only

when stopping traveling devices at a charging area, but also when traveling devices are appropriately stopped at predetermined stopping areas on the route so that the traveling devices are moderately distributed and caused to travel on the route.

Hence, a principal object of the present invention is to appropriately stop each of a plurality of traveling devices at a stopping area without relying on control from a higher-level control station when causing the plurality of traveling devices to travel on a predetermined route.

SOLUTION TO PROBLEM

As a result of earnest study of means for solving the above-described problem, the inventor of the present invention developed an algorithm capable of causing a plurality of traveling devices to be distributed and stopped at a plurality of stopping areas, and obtained the finding that by installing this algorithm in each of the traveling devices, each traveling device can be appropriately stopped at a stopping area without relying on control from a higher-level control station. The inventor then conceived that such a finding could solve the above-described problem and completed the present invention.

A first aspect of the present invention relates to a system 100 for causing a plurality of traveling devices 20 to travel on a predetermined route 10. A plurality of stopping areas AR are provided on the route 10. Note that the route 10 may be a route in which side walls are provided on both left and right sides of the route 10 so that the traveling device 20 travels while in contact with the side walls, or alternatively, a route in which a guide line is drawn on the route 10 so that the traveling device 20 travels along the guide line. Each of the plurality of traveling devices 20 includes a ranging unit, a detection unit, and a control unit. The ranging unit is an element for measuring a distance to a designated point P on the route 10. As the ranging unit, for example, a wireless module that receives a radio signal, a microphone that receives an acoustic signal, or an optical sensor that receives an optical signal can be used. The detection unit detects proximity to another traveling device ahead. The control unit controls starting and stopping of the traveling device itself on a basis of a predetermined algorithm. Specifically, the control unit temporarily stops the traveling device 20 itself when detecting that the traveling device 20 itself has reached the designated point P or has come close to another traveling device 20 ahead. Next, the control unit calculates, while temporarily stopped, a distance from the traveling device 20 itself to the designated point P. Next, the control unit estimates a group to which the traveling device 20 itself belongs on a basis of the distance from the traveling device 20 itself to the designated point P. Next, the control unit obtains stop information for stopping the traveling device itself at the stopping area AR on a basis of information on the group estimated here. Then, the control unit stops the traveling device itself at the stopping area AR on a basis of the stop information. In this way, by implementing an algorithm for controlling starting and stopping in each of the traveling devices 20, each traveling device can appropriately stop at the stopping area AR without communicating with a higher-level control station.

Note that the traveling device 20 according to the present invention may further include a designated-point detection unit. The designated-point detection unit detects that the traveling device 20 has reached the designated point P while traveling on the route 10. The method for detecting the designated point is not particularly limited, but examples include a method of reading a marker indicating the designated point P provided on the route 10 by means of an optical sensor (including visible light, ultraviolet light, and infrared light), a method of acquiring sound (including ultrasound) emitted from the vicinity of the designated point P by means of a sound collecting device (microphone), and a method of detecting magnetism generated from the designated point P by means of a magnetic sensor. In addition, the traveling device 20 can identify the designated point P on the route 10 by using wireless positioning technologies such as a barcode, a QR code (registered trademark), near field communication (NFC), Bluetooth (registered trademark), Quuppa (registered trademark), and the like.

In the system 100 according to the present invention, consider the case where the control unit of the traveling device 20 temporarily stops the traveling device 20 itself as a result of detecting proximity to another traveling device 20 ahead. In this case, the control unit stops the traveling device 20 itself while maintaining a predetermined inter-vehicle distance from the other traveling device 20 ahead. Furthermore, it is preferable that the control unit estimates the group number of the group to which the traveling device 20 itself belongs by estimating the rank of the traveling device 20 itself in a line of traveling devices 20 extending to the designated point P on a basis of the distance to the designated point P, the inter-vehicle distance, and the overall length of the traveling device 20. It is also preferable that the control unit obtains, on a basis of the group number, a pass count (n) that is the number of stopping areas AR that the traveling device 20 itself passes, and stops the traveling device itself at the stopping area AR after the pass count (n) has elapsed. This makes it possible to stop each traveling device 20 at an appropriate stopping area AR without overlapping.

The system 100 according to the present invention preferably further includes a base station 30 installed in the vicinity of the designated point P. The base station 30 transmits a wireless signal such as a radio signal, an acoustic signal, or an optical signal. In this case, it is preferable that the control unit of the traveling device 20 calculates a distance from the traveling device 20 itself to the designated point P on a basis of the wireless signal received by the ranging unit. This enables the distance from the traveling device 20 to the designated point P to be efficiently calculated with a simple

configuration.

In the system 100 according to the present invention, it is preferable that the stopping area AR includes a charger 40 for charging a battery 25 mounted on the traveling device 20. The charger 40 may be either wired or wireless, but it is preferable to adopt a wireless charging type in order to eliminate the need to insert a charging cable into the traveling device 20. This makes it possible to charge the traveling device 20 stopped at the stopping area AR.

In the system 100 according to the present invention, it is preferable that the number of traveling devices 20 is greater than the number of stopping areas AR. It is also preferable that the number of stopping areas AR is equal to or greater than the number of groups. The system 100 according to the present invention can efficiently stop each traveling device 20 in a distributed manner at the stopping areas AR even under such conditions.

In the system 100 according to the present invention, it is preferable that the traveling device 20 does not receive control from an external computer (higher-level control station) and starting and stopping are controlled on a basis of a predetermined algorithm only. This makes it possible to appropriately stop each traveling device 20 at the stopping area AR even in an environment with poor communication conditions, such as indoors.

A second aspect of the present invention relates to the traveling device 20 itself. The traveling device 20 is capable of traveling on a predetermined route 10 on which a plurality of stopping areas AR are provided. The traveling device 20 includes a ranging unit for measuring a distance to a designated point P on the route 10, a detection unit that detects proximity to another traveling device 20 ahead, and a control unit that controls starting and stopping of the traveling device 20 itself on a basis of a predetermined algorithm. The control unit temporarily stops the traveling device 20 itself when detecting that the traveling device 20 itself has reached the designated point P or has come close to another traveling device 20 ahead. The control unit calculates, while temporarily stopped, a distance from the traveling device 20 itself to the designated point P. The control unit estimates a group to which the traveling device 20 itself belongs on a basis of the distance to the designated point P. The control unit obtains stop information for stopping the traveling device 20 itself at the stopping area AR on a basis of information on the group. The control unit stops the traveling device 20 itself at the stopping area AR on a basis of the stop information.

## ADVANTAGEOUS EFFECTS OF INVENTION

According to the present invention, when causing a plurality of traveling devices to travel on a predetermined route, each traveling device can be appropriately stopped at a stopping area without relying on control from a higher-level control station.

## BRIEF DESCRIPTION OF THE DRAWINGS

[Fig. 1] Fig. 1 is a schematic diagram illustrating an example of a traveling device that autonomously travels on a predetermined route.
[Fig. 2] Fig. 2 is an exploded perspective view illustrating constituent elements of the traveling device.
[Fig. 3] Fig. 3 is a block diagram illustrating an example of constituent elements of the traveling device.
[Fig. 4] Fig. 4 is a flow diagram illustrating an example of an algorithm implemented in the traveling device.
[Fig. 5] Fig. 5 schematically illustrates a free-travel step (S1) and a calculation step (S2).
[Fig. 6] Fig. 6 schematically illustrates a passing step (S3) and a stopping step (S4).

## DESCRIPTION OF EMBODIMENTS

An embodiment for practicing the present invention will be described below with reference to the drawings. The present invention is not limited to the embodiment described below but encompasses modifications that are made by those skilled in the art as appropriate within a scope obvious to those skilled in the art from the following embodiment.

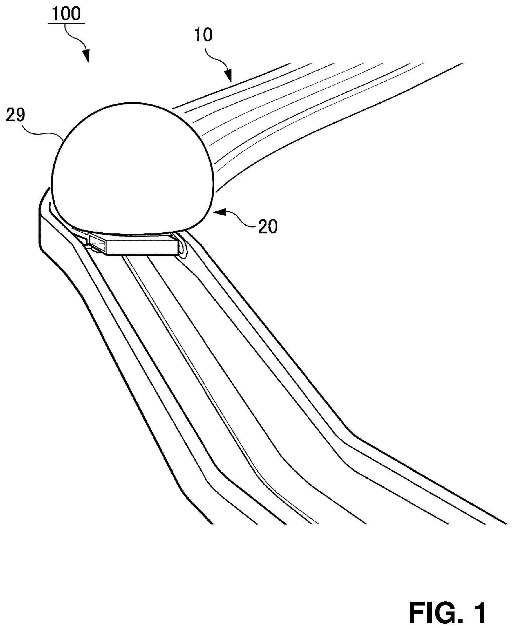

Fig. 1 illustrates how a traveling device 20 travels on a predetermined route 10 (lane) in the traveling system 100 according to the present invention. The traveling device 20 travels along the route 10 by obtaining a driving force from a drive mechanism of the vehicle body. The route 10 has side walls provided on both left and right sides of the travel surface, and the vehicle body of the traveling device 20 advances while in contact with the side walls of the lane. As a result, the traveling device 20 advances while traveling straight or turning along the shape of the lane. The traveling device 20 also includes a light-emitting mechanism. Furthermore, the traveling device 20 includes a dome-shaped cover 29 attached to an upper portion of the vehicle body. Since the cover 29 is transparent or translucent, when a light-emitting mechanism provided inside the cover 29 emits light, the light passes through the cover 29 and can be visually recognized from the outside.

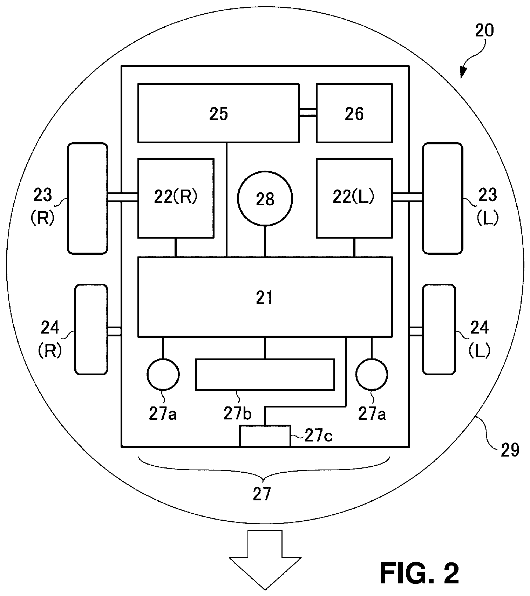

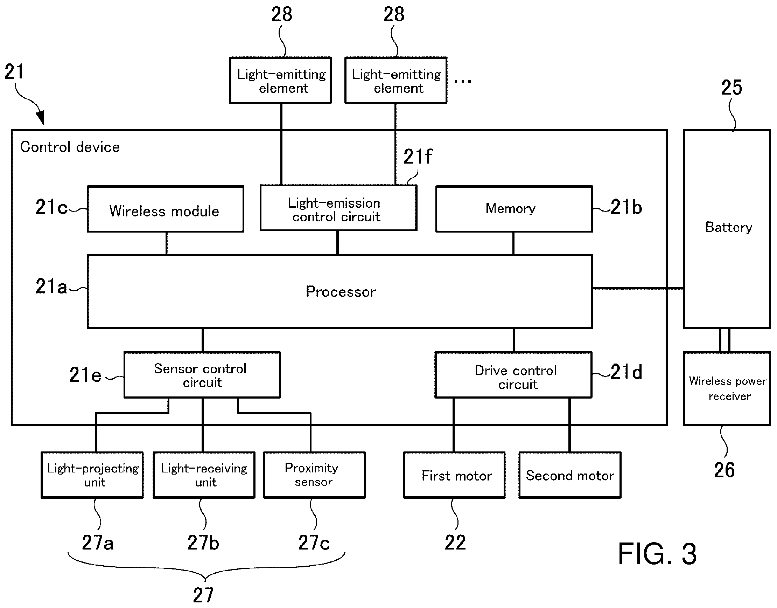

Next, with reference to Fig. 2 and Fig. 3, a configuration example of the traveling device 20 will be described. As

illustrated in Fig. 2, the traveling device 20 includes a control device 21 and two motors 22. Each motor 22 is electrically connected to the control device 21 via an electronic substrate or the like and is controlled by the control device 21. Drive wheels 23 are independently attached to each motor 22. Supplied with electric power from a battery 25, each motor 22 is driven to rotate the drive wheels 23, and the traveling device 20 obtains a driving force as these drive wheels 23 come into contact with the road surface of the route 10. In the present embodiment, since the traveling device 20 employs a rear wheel drive system, each motor 22 is mounted at a rear portion of the chassis of the traveling device 20. In the illustrated example, with respect to the traveling direction of the traveling device 20, a first motor 22(R) rotates the first drive wheel 23(R) on the right side, and a second motor 22(L) rotates the second drive wheel 23(L) on the left side. Note that the traveling device 20 is not limited to the rear wheel drive system and may employ a front wheel drive system.

As each motor 22, known motors can be employed. Specifically, each motor 22 includes a rotary part that includes a stator and a rotor, and an output shaft (shaft) to output a rotating force obtained by the rotary part to the outside. Likewise, as each drive wheel 23, known wheels can be employed. Specifically, each drive wheel 23 includes a wheel member made of metal or plastic, and a tire member made of rubber, which is attached to the outer circumference of the wheel member and produces a high frictional force. Note that the tire member is consumable and can thus be detached from the wheel member and replaced as appropriate. In the present embodiment, the wheel member of each drive wheel 23 is directly fixed to the output shaft of each motor 22. Note that the wheel member and the output shaft may be fixed by means of frictional force generated therebetween, or a known fixing method, such as using an adhesive or welding, may be adopted. Alternatively, the output shaft of the motor 22 and the wheel member of the wheel can be interlocked with an intermediate component interposed therebetween, such as gears and a shaft.

In addition to the drive wheels 23 fixed to each of the motors 22 described above, the traveling device 20 includes one or more driven wheels 24 that are in contact with the road surface of the route 10, as illustrated in Fig. 2. The driven wheels 24 are not connected to a drive source such as a motor 22 and are wheels that assist the traveling of the traveling device 20. In the present embodiment, the driven wheels 24 are arranged at two locations on the right and left sides of a front portion of the chassis of the traveling device 20. Note that the number of driven wheels 24 can be increased or decreased in accordance with the size or the like of the traveling device 20.

The traveling device 20 also includes a battery 25. The battery 25 may be a primary battery or a secondary battery. However, since a rechargeable battery results in higher operational efficiency, it is preferable to adopt a secondary battery as the battery 25. In particular, in the present embodiment, it is assumed that the traveling device 20 continuously travels by repeatedly and automatically charging the battery 25. The electric power of the battery 25 is supplied to, for example, the control device 21, each motor 22, the sensor 27, and the light-emitting elements 28. The remaining charge of the battery 25 may also be monitored by the processor 21a.

The traveling device 20 also includes a power receiving coil 26 for charging the battery 25. The power receiving coil 26 can receive electric power from the outside by electromagnetic induction. For example, when the traveling device 20 stops at the stopping area AR, electric power is supplied to the power receiving coil 26 by electromagnetic induction from a power transmitting coil included in the charger 40 installed at the stopping area AR. The electric power received by the power receiving coil 26 is supplied to the battery 25 via a rectifier circuit or the like, and the battery 25 is charged in a non-contact manner. In this way, electric power can be wirelessly received from an external device by the power receiving coil 26, enabling the battery 25 to be charged.

As illustrated in Fig. 2, the traveling device 20 also includes, as the sensor 27, a light-projecting unit 27a and a light-receiving unit 27b for reading, for example, a marker of a designated point drawn on the route. The light-projecting unit 27a and the light-receiving unit 27b are connected to the control device 21 and transmit detection information to the control device 21. The marker indicating the designated point on the route reflects light of a specific wavelength, for example. For this reason, a photoelectric sensor that can detect the marker by projecting light of a specific wavelength onto the guide line 13 and receiving the reflected light thereof may be used as the light-projecting unit 27a and the light-receiving unit 27b. For example, in the case where a fluorescence pigment is used as the marker indicating the designated point, the light-projecting unit 27a irradiates ultraviolet light (black light) onto the travel surface of the route 10, and the light-receiving unit 27b receives visible light radiated from the fluorescence pigment of the marker upon receiving the ultraviolet light. When the light-receiving unit 27b receives visible light from the fluorescence pigment of the marker, it converts information regarding the relative position of the marker with respect to the light-receiving unit 27b and the like into an electric signal and transmits it to the control device 21. Note that in the present embodiment, the light-projecting unit 27a and the light-receiving unit 27b are used as the designated-point detection unit as described above, but the method of detecting the designated point P is not limited thereto.

As illustrated in Fig. 2, the sensor 27 of the traveling device 20 further includes a proximity sensor 27c. The proximity sensor 27c detects that the traveling device 20 itself has come close to a traveling device 20 ahead of it within a predetermined distance. As the proximity sensor 27c, known sensors can be used. As the proximity sensor 27c, for example, an infrared sensor, a millimeter-wave radar, an ultrasonic sensor, or the like can be used. These sensors can measure the distance when another traveling device 20 is present in front of the traveling device 20 itself. Specifically, an infrared sensor transmits infrared light and measures the reflected light thereof. A millimeter-wave radar transmits radio

waves and measures the reflected waves thereof. An ultrasonic sensor transmits sound waves and measures the reflected sound thereof. When such a remote measurement sensor is used as the proximity sensor 27c and it is detected that the distance to the traveling device 20 ahead has come close to within a predetermined distance, the traveling device 20 automatically stops while maintaining a predetermined inter-vehicle distance from the traveling device 20 ahead, in order to prevent a collision between the traveling devices 20.

As illustrated in Fig. 2, the traveling device 20 may further include one or more light-emitting elements 28. The plurality of light-emitting elements 28 are electrically connected to the control device 21 via an electronic substrate or the like and are controlled by the control device 21. Furthermore, since the cover 29 of the traveling device 20 is transparent or translucent, when the light-emitting elements 28 emit light, the light passes through the cover 29 and can be visually recognized from the outside. As the cover 29, for example, a known polycarbonate material or silicon material can be used. Furthermore, the cover 29 may be constituted by a one-way mirror. The one-way mirror transmits light traveling from the inside thereof toward the outside thereof and reflects light traveling from the outside toward the inside. In this case, for example, a one-way mirror film may be attached to the inner surface of the cover 29 constituted by a silicon member.

Fig. 3 is a block diagram illustrating a control system including the control device 21 as its core component. In the example illustrated in Fig. 3, the control device 21 includes a processor 21a, a memory 21b, a wireless module 21c, a drive control circuit 21d, a sensor control circuit 21e, and a light-emission control circuit 21f. An example of the processor 21a is a known CPU or another control circuit. The processor 21a performs predetermined computation processing according to a predetermined algorithm (program) and data stored in the memory 21b, and executes various types of control processing while writing the results of the computation processing into a working space in the memory 21b. The memory 21b is constituted by, for example, a volatile memory such as a RAM (Random Access Memory) or a nonvolatile memory such as a flash memory, and is used in the computation processing by the processor 21a described above. In the present embodiment, the processor 21a reads a program stored in the memory 21b and performs, according to the program, processing for driving each motor 22 and causing each light-emitting element 28 to emit light.

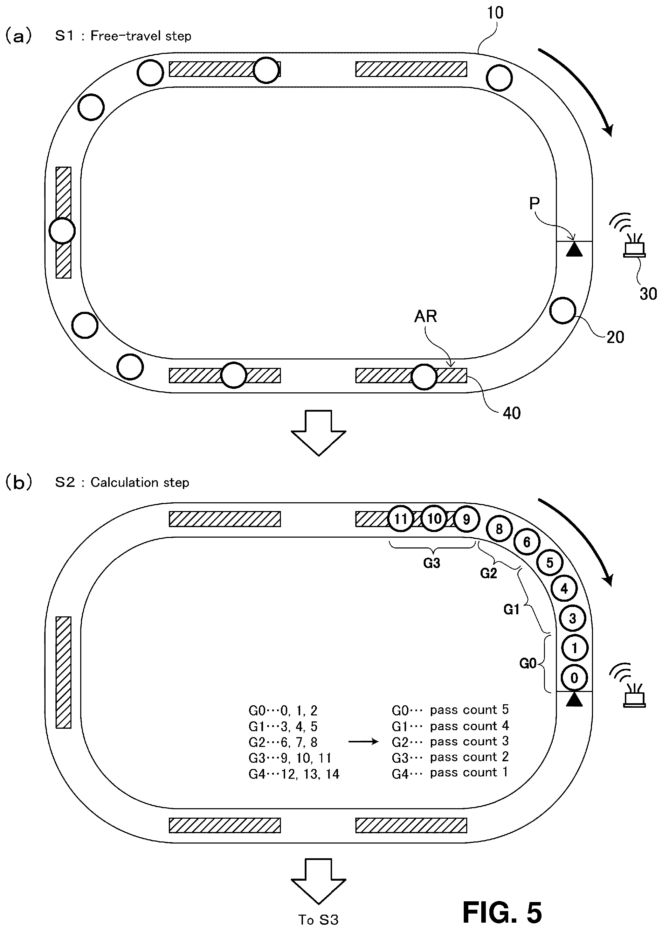

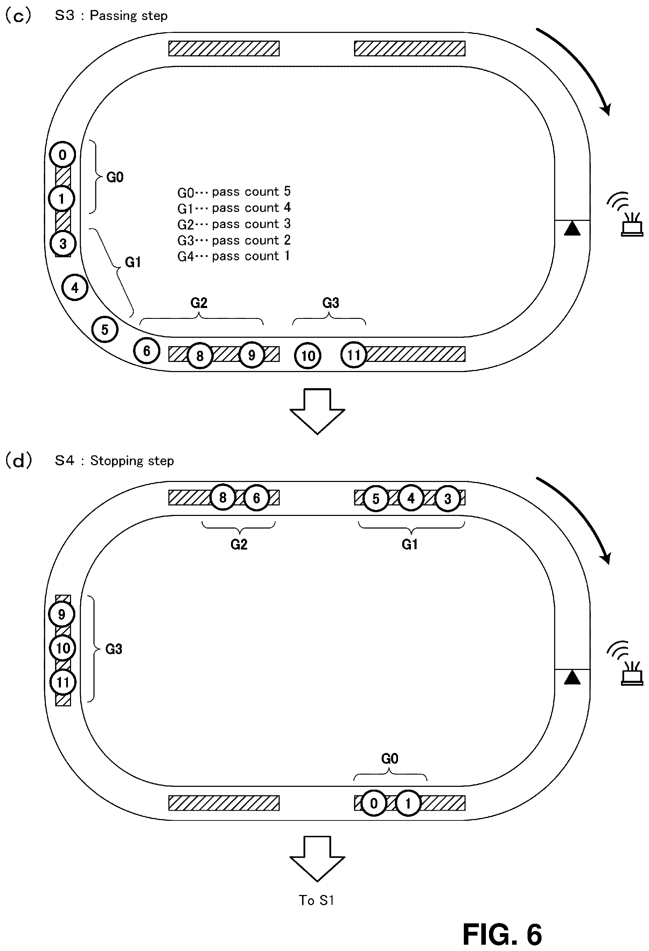

The wireless module 21c receives a wireless signal transmitted from a base station 30 (see Fig. 5 and Fig. 6) installed immediately adjacent to the designated point P on the route 10. The processor 21a can calculate a distance from the traveling device 20 itself to the designated point P (more precisely, the base station 30) on a basis of the strength of the wireless signal received by the wireless module 21c. Specifically, the received radio wave intensity of the base station 30 at the position of the designated point P is measured in advance, and the intensity is stored in the memory 21b of the traveling device 20 as a reference value. Next, the radio wave intensity actually received by the wireless module 21c of the traveling device 20 from the base station 30 is measured. Then, a difference between the radio wave intensity (reference value) stored in the memory 21b and the actually measured radio wave intensity is calculated. Since this difference is inversely proportional to the distance from the base station 30, by experimentally obtaining the relationship between the difference and the distance in advance, the actual distance from the traveling device 20 to the designated point P can be identified on a basis of the calculated difference. The radio waves transmitted by the base station 30 may conform to known wireless standards such as 2.4 GHz, 5 GHz, or Sub1 GHz.

The drive control circuit 21d is a circuit that supplies, on a basis of a control instruction from the processor 21a, electric power from the battery 25 to each motor 22 such that the motors 22(R, L) are driven under predetermined rotating conditions (rotation speed, rotating direction, or the like). Note that by switching the rotating directions of each motor 22, the traveling device 20 can be switched between forward movement and reverse movement. In addition, the drive control circuit 21d is capable of controlling the first motor 22(R) and the second motor 22(R) independently.

The sensor control circuit 21e is a circuit that supplies, on a basis of a control instruction from the processor 21a, electric power from the battery 25 to the sensor 27 to control the on and off thereof, and that transmits information (electric signals) obtained by the light-receiving unit 27b and the proximity sensor 27c to the processor 21a. For example, the processor 21a generates a control instruction for stopping the motor 22 on a basis of positional information on a marker indicating a designated point on the route 10 detected by the light-receiving unit 27b, and outputs the control instruction to the drive control circuit 21d. Also, for example, when the proximity state of the traveling device 20 ahead is detected by the proximity sensor 27c, the processor 21a generates a control instruction for stopping the motor 22 and outputs the control instruction to the drive control circuit 21d. Furthermore, when the departure of the traveling device 20 ahead is detected by the proximity sensor 27c, the processor 21a generates a control instruction for driving the motor 22 again and outputs the control instruction to the drive control circuit 21d.

The light-emission control circuit 21f is a circuit that supplies, on a basis of a control instruction from the processor 21a, electric power from the battery 25 to each light-emitting element 28 such that each light-emitting element 28 emits light under predetermined light-emitting conditions (emitted-light color, luminance, or the like). The light-emission control circuit 21f can control each light-emitting element 28 independently.

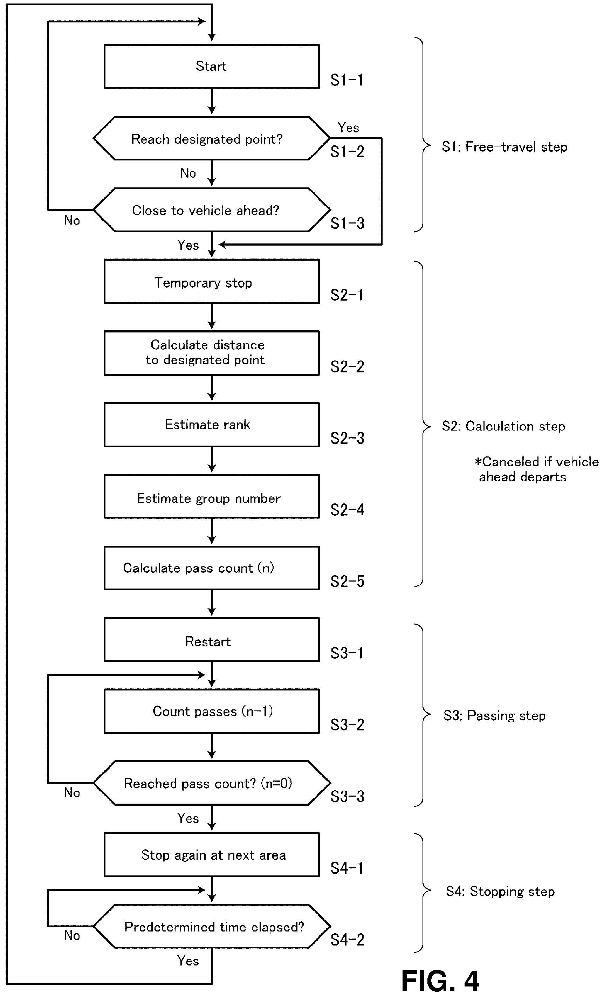

Next, with reference to Fig. 4 to Fig. 6, an algorithm for each of the plurality of traveling devices 20 traveling on the route 10 to independently make a decision to stop at a stopping area AR for battery charging will be described. As illustrated in Fig. 5 and Fig. 6, a base station 30 is installed in the vicinity of the designated point P provided on the route 10, and a wireless signal by radio waves is emitted from the base station 30 as described above. However, the base station 30

simply transmits a wireless signal (radio waves) and provides no control instructions relating to stopping, starting, or the like to the traveling devices 20. Each of the plurality of traveling devices 20 independently determines the stopping area AR at which it should stop on a basis of the algorithm implemented therein. Nevertheless, in the present embodiment, all traveling devices 20 can be smoothly distributed and stopped at the plurality of stopping areas AR (for battery charging) without a number of traveling devices 20 exceeding the capacity of one stopping area AR concentrating and stopping thereat, or the traveling devices 20 colliding with each other on the route 10. Fig. 3 illustrates an example of the algorithm implemented in each traveling device 20 to realize this. As illustrated in Fig. 3, the flow of processing executed by the traveling device 20 includes, broadly divided, a free-travel step (S1), a calculation step (S2), a passing step (S3), and a stopping step (S4). An overview of the free-travel step (S1) is illustrated in Fig. 5(a), an overview of the calculation step (S2) is illustrated in Fig. 5(b), an overview of the passing step (S3) is illustrated in Fig. 6(c), and an overview of the stopping step (S4) is illustrated in Fig. 6(d).

First, the free-travel step (S1) is a step in which the plurality of traveling devices 20 freely travel along the route 10 until entering the next calculation step (S2). In the free-travel step, first, the plurality of traveling devices 20 each start (S1-1). Each traveling device 20 continues to travel along the route 10 until a predetermined stop condition is satisfied.

In the present embodiment, there are two conditions under which the traveling device 20 temporarily stops. As the first stop condition, when the traveling device 20 reaches the designated point P provided on the route 10, the traveling device 20 temporarily stops at the designated point P (S1-2, S2-1). At the designated point P, a marker indicating that it is the designated point P (indicated by ▲ in Fig. 5 and the like) is provided on the route 10, for example. When the traveling device 20 detects this marker by, for example, the sensor 27 (the light-projecting unit 27a and the light-receiving unit 27b), it temporarily stops on the spot. As the second stop condition, when a traveling device 20 detects via the proximity sensor 27c that it has come close to the traveling device 20 ahead within a predetermined distance, the traveling device 20 temporarily stops on the spot (S1-3, S2-1). In the example illustrated in Fig. 6(b), a plurality of traveling devices 20 are temporarily stopped in a line, but the leading traveling device 20 (No. 0) in the line is temporarily stopped by the first stop condition as a result of reaching the designated point P. On the other hand, the plurality of traveling devices 20 that follow behind the leading one are temporarily stopped by the second stop condition as a result of detecting that they have come close to the traveling device 20 ahead within a predetermined distance. The traveling devices 20 that have temporarily stopped in this manner proceed to the next calculation step (S2).

Note that in addition to the case where the leading traveling device 20 reaches the designated point P, there are cases where the inter-vehicle distance between two traveling devices 20 becomes equal to or less than the predetermined distance for some other reason, causing the traveling device 20 to temporarily stop under the second stop condition, but in such cases as well, the temporarily stopped traveling device 20 proceeds to the calculation step (S2). However, after proceeding to the calculation step (S2), if the vehicle ahead departs from the vehicle behind and the inter-vehicle distance between the two traveling devices 20 becomes equal to or greater than the predetermined distance, the calculation step (S2) is canceled and the process returns to the free-travel step (S1) again. At that time, the traveling device 20 discards the calculation results. By doing so, it is possible to avoid a collision between the two traveling devices 20 on the route 10.

Note that the traveling device 20 that has reached the designated point P does not necessarily need to be temporarily stopped unconditionally. For example, the traveling device 20 may be temporarily stopped at the designated point P only when the traveling device 20 reaches the designated point P in a state where the remaining charge of the battery 25 mounted on the traveling device 20 is equal to or less than a predetermined value. There may be cases where the traveling device 20 repeatedly passes the designated point P in a short period of time, such as when the route 10 for traveling is short, but it is inefficient to stop the traveling device 20 at the designated point P each time. For this reason, the additional condition that the remaining charge of the battery 25 is equal to or less than a predetermined value may be added as an additional condition to the first stop condition.

Next, the calculation step (S2) is a step in which each traveling device 20 obtains the number of stopping areas AR to pass on a basis of the position at which it is temporarily stopped. As described above, the traveling device 20 temporarily stops on the spot when the first stop condition or the second stop condition is satisfied, and proceeds to the calculation step (S2-1). In the calculation step (S2), first, each traveling device 20 calculates the distance to the designated point P (S2-2). A wireless signal is transmitted from the base station 30 installed in the vicinity of the designated point P, and each traveling device 20 can calculate the distance to the designated point P by receiving the wireless signal and measuring its signal strength. Note that as illustrated in Fig. 5(b), the distance to the designated point P for the leading traveling device 20 that is temporarily stopped at the designated point P under the first stop condition is zero. Each of the subsequent traveling devices 20 also calculates the distance to the designated point P.

Next, each traveling device 20 uses the distance to the designated point P to estimate its own rank in a line of traveling devices 20 headed by the traveling device 20 stopped at the designated point P (S2-3). Specifically, each traveling device 20 can estimate its own rank by the following Formula 1.

Rank = Distance to designated point P / (Inter-vehicle distance + Overall length of traveling device) [Formula 1]

Note that the decimal part of the solution calculated from Formula 1 above may be truncated.

In Formula 1 above, the "distance to the designated point P" is a variable, and the distance calculated in S2-2 is substituted. Note that the "inter-vehicle distance" refers to one inter-vehicle distance between two traveling devices 20, and the "overall length of traveling device" refers to the length in the traveling direction of one traveling device 20. The inter-vehicle distance and the overall length of the traveling device are constants, and fixed values stored in advance in the memory 21b of the traveling device 20 may be read out. This enables the traveling device 20 to estimate its own rank. In the example illustrated in Fig. 5(b), a total of 10 traveling devices 20 form a line from the head, but the rank of the leading traveling device 20 is "0". The ranks of the remaining 9 traveling devices 20 that follow are "1", "3", "4", "5", "6", "8", "9", "10", and "11", respectively. In this example, the ranks "2" and "7" are missing, but errors may occur in the estimation of ranks because there is variation in the distance from each traveling device 20 to the designated point P. However, one of the advantages of the algorithm of the present embodiment is that such errors can be tolerated.

Next, each traveling device 20 uses the rank obtained in S2-3 to estimate the group number of the group to which it belongs (S2-4). For example, in the example illustrated in Fig. 5(b), 10 traveling devices 20 are temporarily stopped in a line, and up to 3 traveling devices 20 can belong to one group, and up to 5 such groups can be created. Specifically, it is predetermined that traveling devices 20 with ranks 0 to 2 belong to group G0, traveling devices 20 with ranks 3 to 5 belong to group G1, traveling devices 20 with ranks 6 to 8 belong to group G2, traveling devices 20 with ranks 9 to 11 belong to group G3, and traveling devices 20 with ranks 12 to 14 belong to group G4. In this way, in this example, the maximum number of traveling devices that can belong to one group is 3, but this maximum number should be made equal to or less than the capacity of one stopping area AR on the route 10 at which traveling devices 20 can be stopped. Also, in this example, the maximum number of groups is 5, but the maximum number of groups should be made equal to or less than the number of stopping areas AR on the route 10. Note that in the example illustrated in Fig. 5(b), since the number of traveling devices 20 is limited to 10, group G4 is not created.

Once the rank obtained in S2-3 is determined, each traveling device 20 can estimate the group number of the group to which it belongs by the following [Formula 2].

Group number = Rank / Number of traveling devices belonging to one group [Formula 2]

Note that the decimal part of the solution calculated from Formula 2 above may be truncated.

For example, since the number of traveling devices belonging to one group is 3, in the case of the traveling device 20 with rank 11, 11/3 = 3.66, and the group number is "3" (G3).

Next, each traveling device 20 uses the group number obtained in S2-3 to calculate the number of stopping areas to pass after restarting (pass count) (S2-5). The pass count can be obtained by, for example, the following Formula 3.

Pass count = Maximum number of groups - Own group number [Formula 3]

For example, in the example illustrated in Fig. 5, since the maximum number of groups is 5, the pass count for group number "0" (G0) is 5, and the pass count for group number "4" (G4) is 1. Note that instead of obtaining the pass count by calculation using Formula 3 above, the pass count may be associated with each group in advance, and the corresponding data may be stored in the memory 21b or the like of the traveling device 20. Once the calculation of the pass count is completed in this manner, each traveling device 20 proceeds to the next passing step (S3).

Next, the passing step (S3) is a step in which each traveling device 20 restarts and passes the number of stopping areas AR equal to the pass count obtained in the calculation step (S2). In the passing step (S3), first, each traveling device 20 that has completed the calculation of the pass count restarts (S3-1). After restarting, each traveling device 20 passes through the designated point P.

Thereafter, each traveling device 20 counts the number of stopping areas AR passed while advancing on the route 10 (S3-2), and determines whether the number of stopping areas AR passed has reached its own pass count (S3-3). As a method for the traveling device 20 to count the number of stopping areas AR, for example, a marker readable by the sensor 27 (the light-projecting unit 27a and the light-receiving unit 27b) of the traveling device 20 may be provided at each stopping area AR, and when the sensor 27 reads the marker, the traveling device 20 may count it as having reached the stopping area AR. Alternatively, for example, when electric power is supplied from the charger 40 provided at the stopping area AR to the traveling device 20, the traveling device 20 may count it as having reached the stopping area AR. In this manner, each traveling device 20 continues to travel on the route 10 until the number of stopping areas AR passed reaches its own pass count. Once the counting of the pass count is completed, each traveling device 20 proceeds to the next stopping step (S4).

The stopping step (S4) is a step in which each traveling device 20 stops again at a stopping area AR. At this time, when a charger 40 is provided at the stopping area AR, electric power is supplied from the charger 40 to the traveling device

20, and the battery 25 mounted on the traveling device 20 is charged. First, when the number of stopping areas AR that each traveling device 20 has passed in the passing step (S3) reaches its own pass count, the traveling device 20 stops at the next stopping area AR (S4-1). For example, since the pass count of the traveling devices 20 belonging to group G0 is 5, when the traveling devices 20 of group G0 finish passing 5 stopping areas AR, they stop at the next, sixth stopping area AR. The same applies to traveling devices 20 belonging to other groups.

Fig. 6(d) illustrates a state in which all traveling devices 20 have stopped at stopping areas AR. As illustrated in this figure, since the plurality of traveling devices 20 are distributed and stopped at the plurality of stopping areas AR, the traveling devices 20 do not concentrate in excess of the capacity of one stopping area AR. Furthermore, the traveling devices 20 stopped at the stopping areas AR do not impede the travel of the subsequent traveling devices 20.

Thereafter, each traveling device 20 that has stopped at the stopping area AR waits at the stopping area AR until a predetermined time has elapsed (step S4-2). In the example illustrated in Fig. 5 and Fig. 6, each stopping area AR is provided with a charger 40, and the charger 40 includes a power transmitting coil (not illustrated) for supplying electric power by electromagnetic induction. During the waiting time, the traveling device 20 that has stopped at the stopping area AR receives, by the power receiving coil 26, the electric power supplied from the power transmitting coil of the charger 40 at each stopping area AR, and supplies the electric power to the battery 25 via a rectifier circuit or the like. As a result, the battery 25 is charged in a non-contact manner while the traveling device 20 is waiting at the stopping area AR. The time for which the traveling device 20 waits at the stopping area AR can be adjusted as appropriate, but it is preferable to set it to, for example, approximately 30 seconds to 5 minutes.

Once the waiting period of the predetermined time at the stopping area AR is over, each traveling device 20 starts and returns to the free-travel step (S1) again. When transitioning from the stopping step (S4) to the free-travel step (S1), each traveling device 20 discards the calculation results up to that point. In this way, each traveling device 20 repeats the free-travel step (S1) through the stopping step (S4) entirely by its own judgment and calculation. This enables each traveling device 20 to continue traveling on the route 10 while charging the battery 25 at appropriate times. Although each traveling device 20 travels and stops in accordance with the algorithm implemented therein, this algorithm makes it possible to avoid the situation where traveling devices 20 concentrate in excess of the capacity of the stopping areas AR, or where a stopped traveling device 20 impedes the travel of subsequent traveling devices 20. In addition, since this algorithm can tolerate even some degree of error in the distance measurement and calculation by each traveling device 20, it is possible to appropriately maintain the flow of traveling devices 20 throughout the system.

Herein, an embodiment of the present invention has been described above with reference to the accompanying drawings to express the content of the present invention. However, the present invention is not limited to the above-described embodiment but encompasses modifications and improvements obvious to those skilled in the art based on the matters described in the present specification.

For example, in the embodiment described above, as travel controlling means of the traveling device 20, means for adjusting the traveling direction of the traveling device 20 by independently controlling the two motors 22 was adopted. However, the travel controlling means of the traveling device 20 is not limited thereto. For example, in addition to the motor 22 that rotates the drive wheels 23 (rear wheels), it is also possible to provide a steering motor for rotating the orientation (yaw angle) of one or more driven wheels 24 (front wheels), and to adjust the traveling direction of the entire traveling device 20 by controlling the orientation of the driven wheels with the steering motor. The traveling direction of the traveling device 20 is determined by the orientation of the driven wheels 24. Note that in this case, there is no need to independently control the two motors 22 that rotate the drive wheels 23 (rear wheels); it is sufficient to simply set the same rotation speed and the same rotating direction. In addition, known travel controlling means can be adopted as the travel controlling means of the traveling device 20.

Furthermore, for example, in the embodiment described above, the charger 40 is provided at each stopping area AR, but it is not necessarily required to provide the charger 40 at the stopping area AR. For example, when a plurality of traveling devices 20 are continuously traveling on the route 10, the traveling devices 20 may partially become congested due to differences in speed among the traveling devices 20, or conversely, the intervals between the traveling devices 20 may become too large. In such cases, according to the present invention, by temporarily stopping each traveling device 20 and then distributing them to the stopping areas AR provided on the route 10 and having them wait there temporarily, the intervals at which the traveling devices 20 travel on the route 10 can be appropriately adjusted.

REFERENCE SIGNS LIST

10 route
20 traveling device
21 control device
21a processor

21b memory
21c wireless module
21d drive control circuit
21e sensor control circuit
21f light-emission control circuit
22 motor
23 drive wheel
24 driven wheel
25 battery
26 power receiving coil
27 sensor
27a light-projecting unit
27b light-receiving unit
27c proximity sensor
28 light-emitting element
29 cover
30 base station
40 charger
100 traveling system
AR stopping area
P designated point

**Claims**

**1.** A system for causing a plurality of traveling devices to travel on a predetermined route, wherein

a plurality of stopping areas are provided on the route,
each of the traveling devices includes:

a ranging unit for measuring a distance to a designated point on the route;
a detection unit that detects proximity to another traveling device ahead; and
a control unit that controls starting and stopping of the traveling device itself on a basis of a predetermined algorithm,

the control unit:

temporarily stops the traveling device itself when detecting that the traveling device itself has reached the designated point or has come close to another traveling device ahead;
calculates, while temporarily stopped, a distance from the traveling device itself to the designated point;
estimates a group to which the traveling device itself belongs on a basis of the distance to the designated point;
obtains stop information for stopping the traveling device itself at the stopping area on a basis of information on the group; and
stops the traveling device itself at the stopping area on a basis of the stop information.

**2.** The system according to claim 1, wherein the control unit:

when the traveling device itself is temporarily stopped as a result of detecting proximity to another traveling device ahead,
stops the traveling device itself while maintaining a predetermined inter-vehicle distance from the other traveling device ahead;
estimates a group number of the group to which the traveling device itself belongs by estimating a rank of the traveling device itself in a line of traveling devices extending to the designated point on a basis of the distance to the designated point, the inter-vehicle distance, and an overall length of a traveling device; and
obtains, on a basis of the group number, a pass count that is a number of stopping areas the traveling device itself passes, and stops the traveling device itself at the stopping area after passing the pass count of stopping areas.

**3.** The system according to claim 1 or 2, wherein

the system includes a base station installed in the vicinity of the designated point,
the base station transmits a wireless signal of a radio signal, an acoustic signal, or an optical signal, and
the control unit of the traveling device calculates a distance from the traveling device itself to the designated point on a basis of the wireless signal received by the ranging unit.

**4.** The system according to claim 1 or 2, wherein the stopping area includes a charger for charging a battery mounted on the traveling device.

**5.** The system according to claim 1 or 2, wherein

the number of the traveling devices is greater than the number of the stopping areas, and
the number of the stopping areas is equal to or greater than the number of the groups.

**6.** The system according to claim 1 or 2, wherein the traveling device does not receive control from an external computer, and starting and stopping are controlled on a basis of the algorithm only.

**7.** A traveling device capable of traveling on a predetermined route on which a plurality of stopping areas are provided, the traveling device comprising:

a ranging unit for measuring a distance to a designated point on the route;
a detection unit that detects proximity to another traveling device ahead; and
a control unit that controls starting and stopping of the traveling device itself on a basis of a predetermined algorithm,
wherein the control unit:

temporarily stops the traveling device itself when detecting that the traveling device itself has reached the designated point or has come close to another traveling device ahead;
calculates, while temporarily stopped, a distance from the traveling device itself to the designated point;
estimates a group to which the traveling device itself belongs on a basis of the distance to the designated point;
obtains stop information for stopping the traveling device itself at the stopping area on a basis of information on the group; and
stops the traveling device itself at the stopping area on a basis of the stop information.

100
10
29
20

FIG. 1

20
25
26
22(R)
28
22(L)
23 (R)
23 (L)
21
24 (R)
24 (L)
27a
27b
27a
27c
29
27

FIG. 2

25
Battery
Wireless power receiver
26
21
Control device
21c
Wireless module
21a
Processor
21b
Memory
21f
Light-emission control circuit
21d
Drive control circuit
21e
Sensor control circuit
28
Light-emitting element
28
Light-emitting element
...
Second motor
First motor
22
Proximity sensor
27c
Light-receiving unit
27b
Light-projecting unit
27a
27

FIG. 3

Start
S1-1
Reach designated point?
Yes
S1-2
No
Close to vehicle ahead?
No
S1-3
Yes
S1: Free-travel step
Temporary stop
S2-1
Calculate distance
to designated point
S2-2
Estimate rank
S2-3
Estimate group number
S2-4
Calculate pass count (n)
S2-5
S2: Calculation step
*Canceled if vehicle
ahead departs
Restart
S3-1
Count passes (n-1)
S3-2
Reached pass count? (n=0)
No
S3-3
Yes
S3: Passing step
Stop again at next area
S4-1
Predetermined time elapsed?
No
S4-2
Yes
S4: Stopping step


FIG. 4

(a) S1 : Free-travel step
10
P
30
AR
20
40
(b) S2 : Calculation step
11
10
9
8
6
5
4
3
1
0
G3
G2
G1
G0
G0…0, 1, 2
G1…3, 4, 5
G2…6, 7, 8
G3…9, 10, 11
G4…12, 13, 14
G0… pass count 5
G1… pass count 4
G2… pass count 3
G3… pass count 2
G4… pass count 1
To S3

FIG. 5

(c) S3 : Passing step
G0
G1
G2
G3
G0··· pass count 5
G1··· pass count 4
G2··· pass count 3
G3··· pass count 2
G4··· pass count 1
0
1
3
4
5
6
8
9
10
11
(d) S4 : Stopping step
8
6
5
4
3
G2
G1
9
10
11
G3
G0
0
1
To S1


FIG. 6

## INTERNATIONAL SEARCH REPORT

International application No. **PCT/JP2024/042631**

**A. CLASSIFICATION OF SUBJECT MATTER**

***G05D 1/242***(2024.01)i; ***G05D 1/43***(2024.01)i; ***G05D 1/69***(2024.01)i
FI: G05D1/242; G05D1/43; G05D1/69

According to International Patent Classification (IPC) or to both national classification and IPC

**B. FIELDS SEARCHED**

Minimum documentation searched (classification system followed by classification symbols)

G05D1/242; G05D1/43; G05D1/69

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-187498 A (HONDA MOTOR CO., LTD.) 19 November 2020 (2020-11-19) paragraphs [0058]-[0061], [0071]-[0075], fig. 6 | 1-7 |
| A | JP 2019-96103 A (MITSUBISHI JIDOSHA KOGYO KABUSHIKI KAISHA) 20 June 2019 (2019-06-20) paragraphs [0016]-[0020], fig. 2 | 1-7 |
| A | JP 2022-154171 A (IHI CORP.) 13 October 2022 (2022-10-13) paragraphs [0027]-[0051], fig. 3a-3b | 1-7 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 February 2025** | **18 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/042631**

| Patent document cited in search report | Publication date (day/month/year) | Patent family member(s) | Publication date (day/month/year) |
|---|---|---|---|
| JP 2020-187498 A | 19 November 2020 | US 2020/0365027 A1<br>paragraphs [0079]-[0082], [0093]-[0097], fig. 6<br>CN 111932927 A | |
| JP 2019-96103 A | 20 June 2019 | (Family: none) | |
| JP 2022-154171 A | 13 October 2022 | US 2022/0315057 A1<br>paragraphs [0036]-[0061], fig. 3A-3B<br>DE 102022107242 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7365084 B
- JP 2006181241 A